# FASCICULE DE BREVET EUROPEEN

(11) **EP 1 605 259 B1**
(45) Date de publication et mention de la délivrance du brevet: **20.12.2017**
(21) Numéro de dépôt: 05291252.4
(22) Date de dépôt: 10.06.2005
(51) Int. Cl.: G01N 29/22, G01N 27/90

(54) **Installation de contrôle non destructif d'une pièce**
Einrichtung zur zerstörungsfreien Kontrolle eines Werkstücks.
Installation for non-destructive testing of a workpiece

(30) Priorité: 11.06.2004 FR 0406340
(43) Date de publication de la demande: 14.12.2005
(73) Titulaire: SNECMA, 75015 Paris (FR)
(72) Inventeur: Cabanis, Patrick, 77390 Ozouer le Voulgis (FR); Coulette, Richard, 94250 Gentilly (FR); Marceau, Christian, 77127 Lieusaint (FR)
(74) Mandataire: Intès, Didier Gérard André

(56) Documents cités:
- US-A- 5 108 350
- US-A- 5 161 413
- US-A- 5 670 879
- US-A- 5 710 378
- US-A- 5 781 007
- US-B1- 6 487 922

## Description

L'invention se rapporte à une installation de contrôle non destructif d'une pièce, notamment une pièce de relativement grandes dimensions et de forme complexe, comme par exemple le rotor du compresseur haute pression. L'invention concerne plus particulièrement un agencement de capteurs permettant d'effectuer simultanément plusieurs mesures et de réduire ainsi le temps d'acquisition des données nécessaires pour évaluer l'état de la pièce.

Certaines pièces de forme complexe et soumises à des contraintes mécaniques et thermiques importantes, comme par exemple un rotor de compresseur haute pression de turboréacteur, nécessitent un contrôle rigoureux avant mise en service ou dans le cadre d'une révision. Par exemple, un tel rotor est constitué de disques soudés et espacés les uns des autres, en alliage de titane ou à base nickel, elle comporte donc des cavités annulaires réputées difficilement accessibles. Ces cavités sont les espaces qui séparent les disques. Différents défauts ou dégradations peuvent affecter ce rotor et notamment les disques intérieurs. Par exemple, on sait que l'alliage de titane dans lequel ils sont formés peut renfermer des inclusions. Ces hétérogénéités créent des zones de faiblesse dans le métal. Elles peuvent par exemple être détectées par un examen aux ultrasons comme décrit dans le document US5781007. L'apparition de fissures, notamment après un certain temps d'exploitation, est également possible. Ces défauts peuvent, par exemple, être détectés par un examen au moyen d'une sonde à courants de Foucault. Il n'avait pas été envisagé jusqu'à présent de contrôler les disques intérieurs d'une telle pièce. L'invention permet de réaliser cette opération.

Plus particulièrement, l'invention concerne une installation de contrôle non destructif d'une pièce selon la revendication 1. La surface à contrôler n'est pas complètement plane : elle est dite "évolutive", radialement.

Dans un mode de réalisation actuellement préféré, ledit support est équipé d'un capteur à courants de Foucault et d'au moins un capteur à ultrasons. De préférence, ledit support est équipé de deux capteurs à ultrasons agencés de part et d'autre dudit capteur à courants de Foucault.

On peut aussi prévoir plusieurs capteurs à courants de Foucault de caractéristiques différentes et, plus généralement plusieurs capteurs mettant en oeuvre des phénomènes physiques différents.

Avantageusement, ledit support de capteur comporte des galets de roulement par lesquels il est et reste en contact avec ladite surface à contrôler pendant toute la scrutation. De cette façon, la distance optimale entre les capteurs et le matériau à contrôler est maintenue en permanence.

De plus, le support peut être assujetti à se déplacer dans un liquide de couplage, nécessaire ou au moins avantageux pour la mise en oeuvre du contrôle par ultrasons. Classiquement, ce liquide de couplage est de l'eau. Pour ce faire, la pièce à contrôler peut être entièrement immergée dans une cuve remplie d'eau et le support est déplacé dans cette cuve tout en restant en contact avec la pièce à contrôler.

Dans le cas d'un support portant un capteur à courants de Foucault et deux capteurs à ultrasons, le capteur à courants de Foucault est agencé dans le support pour être placé en regard d'une zone élémentaire, en cours de contrôle, de la pièce à contrôler tandis que deux capteurs à ultrasons sont installés sur le support de façon que leurs axes d'action convergent sensiblement vers ladite zone élémentaire. En effet, pour un contrôle par ultrasons il est apparu avantageux de scruter la surface à contrôler sous plusieurs incidences. Par exemple, ces axes appartiennent au même plan. De plus, pour éviter que les capteurs à ultrasons ne se perturbent mutuellement, ils peuvent être mis en oeuvre alternativement.

L'invention sera mieux comprise et d'autres avantages de celle-ci apparaîtront mieux à la lumière de la description qui va suivre d'une installation de contrôle non destructif d'une pièce équipée d'un ensemble de capteurs, conformément au principe de l'invention, donnée à titre d'exemple et faite en référence aux dessins annexés dans lesquels :

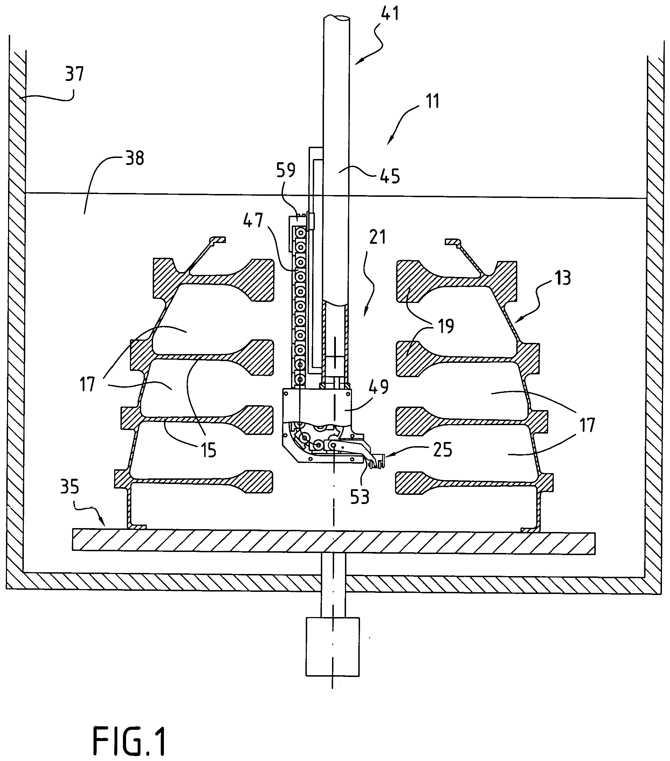

- la figure 1 est une vue schématique de l'installation de contrôle non destructif d'un rotor de compresseur haute pression ;

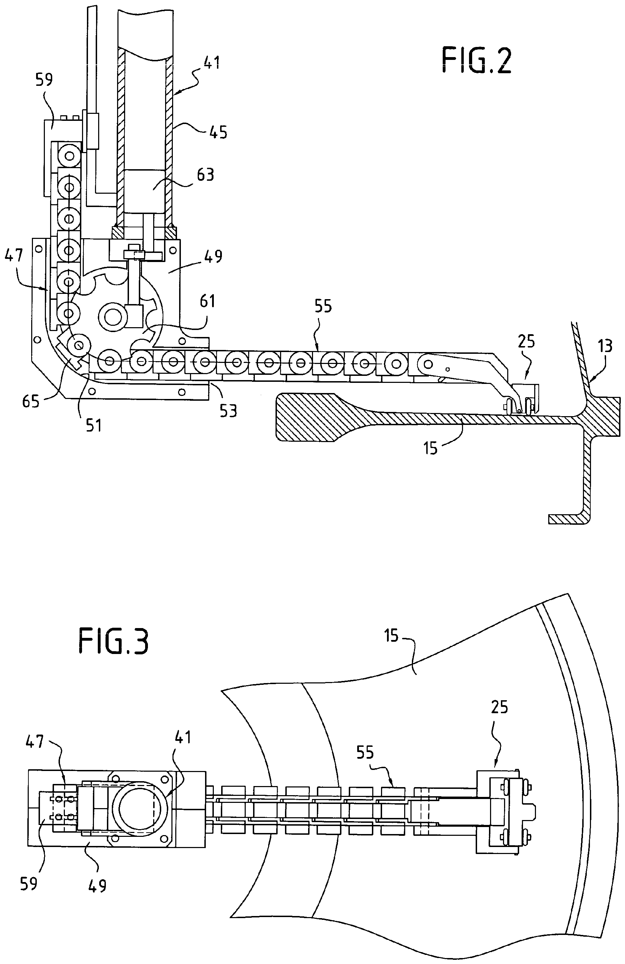

- la figure 2 est une vue de détail à plus grande échelle de l'installation, illustrant la mise en oeuvre de la scrutation de la surface de l'un des disques dudit rotor ;
- la figure 3 est une vue de dessus de la figure 2 ;

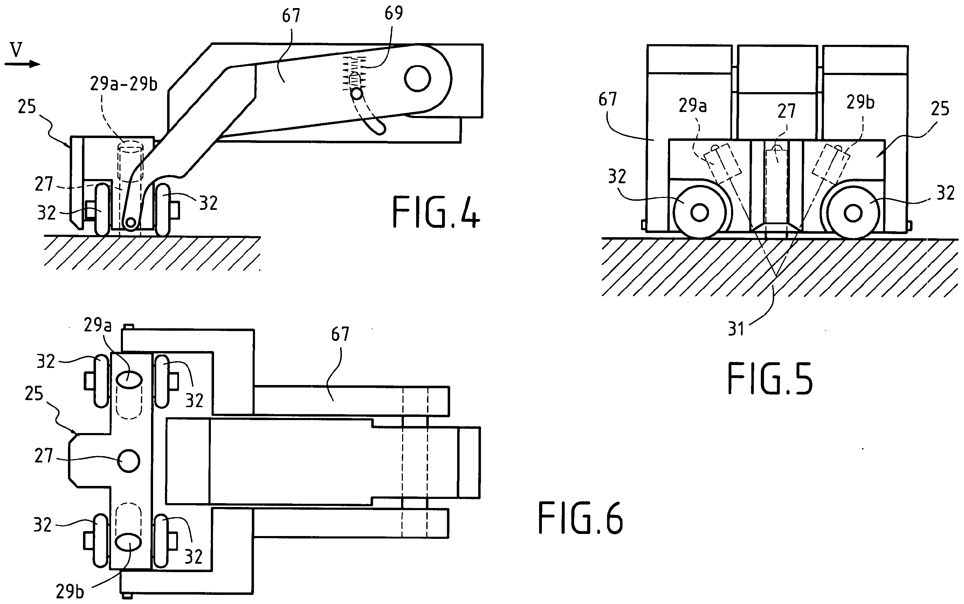

- la figure 4 est une vue de détail du support de capteurs ;
- la figure 5 est une vue selon la flèche V de la figure 4 ; et
- la figure 6 est une vue de dessus de la figure 4.

L'installation de contrôle non destructif 11 telle que décrite et représentée est plus spécifiquement adaptée au contrôle d'une pièce 13 formant un rotor, du genre équipant un turboréacteur d'avion, cette roue particulière étant encore appelée « spool ». Dans le réacteur, cette pièce porte des aubes et tourne à grande vitesse. Elle est entièrement en alliage de titane ou à base nickel et réalisée à partir de disques 15 soudés les uns aux autres. Une fois achevée, la pièce, de grande dimension (jusqu'à 50 cm de diamètre environ) est de forme complexe comprenant plusieurs cavités annulaires 17 coaxiales et adjacentes axialement, séparées par les disques 15 annulaires, présentant chacun un renflement 19 près de son bord intérieur. Un espace 21 commun à toutes les cavités, s'étendant lui-même axialement, se trouve ainsi défini au centre de la pièce.

On désire notamment contrôler tous les disques 15 et plus particulièrement détecter dans ceux-ci d'éventuelles inclusions ou encore des fissures (encore appelées criques).

Dans l'exemple, on prévoit de détecter les inclusions principalement par une analyse aux ultrasons et de détecter les fissures principalement par une analyse par courants de Foucault.

Des capteurs à ultrasons et à courants de Foucault, formant émetteur-détecteur, sont disponibles sur le marché.

Plus généralement, l'invention vise à réaliser une analyse d'une pièce à partir de plusieurs capteurs mettant en oeuvre des phénomènes physiques différents, afin de relever des groupes de données spécifiques de ces capteurs et correspondant respectivement (pour chaque groupe) à des zones de la surface de chaque disque. Les groupes de données sont relevés en scrutant ladite surface zone après zone. Ainsi, toutes les données nécessaires sont acquises en une seule scrutation.

Dans l'exemple, tous les capteurs sont portés par un même support de capteurs 25 apte à se déplacer en regard de chaque surface à contrôler de chaque disque 15. Le support de capteurs est équipé d'un capteur à courants de Foucault 27 et d'au moins un capteur à ultrasons. Dans l'exemple représenté, le support est équipé de deux capteurs à ultrasons 29a, 29b disposés de part et d'autre du capteur à courants de Foucault 27. Ce dernier est installé sur le support pour être en regard de la zone élémentaire 31 de la surface du disque (perpendiculairement à celle-ci) qui fait l'objet du contrôle à un instant donné, tandis que les deux capteurs à ultrasons 29a, 29b sont orientés de façon que leurs axes d'action convergent sensiblement vers ladite zone élémentaire. Plus précisément ici, les axes d'action des capteurs à ultrasons font un angle d'environ 25° par rapport à un axe du capteur à courants de Foucault, lui-même sensiblement perpendiculaire à la surface à contrôler. Pour éviter que les capteurs à ultrasons 29a, 29b ne se perturbent mutuellement, ils sont temporellement mis en oeuvre alternativement. Les directions de ces axes sont prévues pour que les faisceaux frappent sensiblement la même zone élémentaire, soumise à l'analyse par courants de Foucault. Par exemple, on peut procéder par « tirs » d'ultrasons décalés de 300 à 400 micro-secondes, les faisceaux acoustiques ultrasoniques ayant une fréquence voisine de 5 mégahertz. On peut aussi décaler les capteurs pour qu'ils "visent" des zones voisines mais différentes ; l'essentiel est que l'ensemble des données soit acquis en une seule scrutation.

Comme cela est visible sur les dessins, le support de capteurs 25 a la forme d'un petit chariot muni de galets de roulement 32 par lesquels il est en contact avec la surface à contrôler pendant la scrutation de l'un des disques. Par ce moyen simple, on est assuré que les capteurs se trouvent toujours placés à la distance voulue de la zone à contrôler. En effet, le disque étant disposé horizontalement pendant l'analyse, le chariot repose sur la surface du disque et roule sur celle-ci au fur et à mesure de l'acquisition des données. Les galets de roulement 32 sont disposés pour que leurs axes de rotation soient approximativement orientés radialement par rapport au disque, pour favoriser un déplacement circulaire. En effet, ladite scrutation s'effectue par tours successifs permettant d'analyser une bande annulaire étroite, zone après zone. Entre deux tours, un déplacement radial élémentaire du chariot est commandé pour poursuivre la scrutation d'une bande annulaire adjacente. Les galets de roulement pourraient d'ailleurs être remplacés par des sphères retenues captives dans des logements correspondants du supports, facilitant les déplacements élémentaires dans le sens radial.

Pendant l'analyse, la pièce 13 est entraînée en rotation autour de son propre axe de révolution et le support est posé sur l'un des disques à une distance radiale réglable. Pour ce faire, l'installation comporte aussi un plateau horizontal tournant 35, motorisé. La pièce à analyser est posée sur ce plateau de façon que son axe de révolution coïncide avec l'axe de rotation dudit plateau. Ce dernier est commandé pour tourner à vitesse constante. La vitesse est néanmoins adaptée au rayon de la zone scrutée pour que le contrôle s'effectue toujours à une même vitesse choisie, par exemple de l'ordre de 300 millimètres par seconde.

Le contrôle s'effectue tour après tour avec une progression radiale pas à pas de 6 dixièmes de millimètre, environ. On peut ainsi acquérir simultanément en une seule scrutation trois « images » différentes de la structure de l'alliage, ce qui permet de détecter avec une quasi certitude tous les défauts mentionnés ci-dessus.

De plus, le support est assujetti à se déplacer dans un liquide de couplage favorable à l'analyse par ultrasons. En l'occurrence, ce liquide est simplement de l'eau. A cet effet, le plateau 35 est agencé au fond d'une cuve 37 remplie d'eau 38 en sorte que la pièce 13 à analyser se trouve totalement immergée dans l'eau pendant le contrôle. Le contrôle, disque par disque, s'effectue entièrement dans l'eau.

On commence par scruter et analyser les surfaces placées horizontalement en passant de l'une à l'autre comme il sera indiqué plus loin. Puis, on peut retourner la pièce 13 pour contrôler les mêmes disques à nouveau mais en scrutant les autres surfaces de ceux-ci. On peut ainsi détecter de façon fiable des défauts se situant à des profondeurs différentes dans l'épaisseur du métal. Il est à noter que le fait de procéder au contrôle de la surface horizontale inférieure dans chaque cavité 17 permet d'éviter que les mesures soient perturbées par des bulles d'air, celles-ci ayant tendance à s'accumuler contre la surface horizontale supérieure, au-dessus du support 25, d'où l'intérêt de retourner la pièce pour scruter l'ensemble des surfaces.

Pour réaliser ladite scrutation d'une surface annulaire de disque, par le support de capteurs, il faut combiner un déplacement circulaire et un déplacement radial du support et/ou de la pièce. Dans l'exemple décrit, on a choisi de faire tourner la pièce 13 autour de son axe de révolution et de déplacer le chariot radialement, pas par pas. Une autre solution, facile à mettre en oeuvre, consiste à ne pas faire tourner la pièce mais à déplacer le support 25 en une succession de rotations et de déplacements dans le sens radial. Dans l'exemple, ledit support 25 est rattaché de façon articulée à l'extrémité d'un moyen de déplacement 41 qui peut lui faire faire aussi bien une rotation qu'un déplacement radial mais qui (compte tenu du fait que la pièce elle-même est montée sur un plateau tournant) est ici agencé pour déplacer ledit chariot radialement par rapport à l'axe de rotation du plateau.

On va maintenant décrire le moyen de déplacement 41 auquel est rattaché le support. Il comprend une colonne verticale 45 mobile, à positionnement réglable, installée au-dessus du plateau et agencée pour s'engager dans ledit espace 21 commun auxdites cavités annulaires, défini axialement au centre de l'ensemble des disques 15 et une chaîne à maillons bloquants 47 montée coulissante le long de ladite colonne. Cette dernière est mobile longitudinalement suivant son propre axe, c'est-à-dire verticalement. Elle porte à son extrémité inférieure un boîtier de renvoi 49 comportant une sorte de conduit de guidage 51 coudé, dans lequel circule ladite chaîne. Ce conduit présente une sortie latérale 53 par où la chaîne ressort sensiblement horizontalement sous forme de tronçon rigide 55 avec ses maillons mutuellement bloqués. L'extrémité de la chaîne, c'est-à-dire l'extrémité du tronçon rigide est liée à au moins un capteur de mesure, c'est-à-dire, selon l'exemple, au support 25 portant l'ensemble des capteurs, décrit ci-dessus. Ainsi, en faisant varier la longueur du tronçon rigide 55, le capteur ou le support 25 peut se déplacer en regard de la surface de l'un des disques 15, pour effectuer le contrôle et la détection des défauts. Dans l'exemple, le déplacement est essentiellement radial puisque la pièce à contrôler est placée sur un plateau tournant. L'axe de la colonne 41 coïncide aussi avec l'axe de rotation du plateau 35.

Selon un mode de réalisation décrit et donné uniquement à titre d'exemple, l'autre extrémité de la chaîne est fixée à un coulisseau 59 engagé dans une sorte de glissière verticale installée le long de la colonne. Le boîtier abrite un pignon 61 en prise avec la chaîne. Ce pignon est entraîné par un moteur électrique commandé 63, via un système d'engrenages. Le moteur peut être monté à l'extrémité inférieure de la colonne. La chaîne à maillons bloquants 47 est d'un type connu. On peut utiliser une chaîne dite « pas 25 » commercialisée sous la marque « SERAPID ». Une telle chaîne est remarquable en ce que ses maillons sont pourvus de talons 65 qui se bloquent les uns aux autres lorsqu'ils sont alignés et sollicités en rotation dans un sens donné, ici sous l'action de la pesanteur. La rotation du pignon 61 permet de régler la longueur du tronçon horizontal rigide 55 de la chaîne.

Le déplacement commandé de la colonne permet de passer d'un disque donné à un disque voisin, inférieur ou supérieur, la chaîne étant complètement rétractée.

Le support est rattaché, de façon articulée, à l'extrémité dudit tronçon rigide de la chaîne, par l'intermédiaire d'un levier pivotant 67 à deux bras. Il est sollicité vers la surface à scruter par un ressort 69, pour que le support formant chariot soit bien en contact, en toutes circonstances, avec la surface à contrôler.

## Revendications

1. Installation de contrôle non destructif d'une pièce formant rotor admettant un axe de révolution et comportant des cavités annulaires coaxiales et adjacentes axialement et un espace commun (21) s'étendant axialement entre lesdites cavités annulaires (17), comportant un support de capteurs (25) apte à se déplacer en regard d'une surface à contrôler de ladite pièce et des moyens pour combiner un déplacement circulaire et un déplacement radial dudit support et/ou de ladite pièce et en ce que ledit support est équipé de plusieurs capteurs de caractéristiques physiques différentes (27, 29) pour relever des groupes de données spécifiques de ces capteurs, correspondant respectivement à des zones de ladite surface définies par une seule scrutation de celle-ci, et l'installation étant **caractérisée en ce qu'**elle comporte un plateau horizontal (35) sur lequel ladite pièce (13) peut être disposée pour le contrôle, une colonne (41) verticale mobile au-dessus dudit plateau et agencée pour s'engager dans ledit espace commun de ladite pièce à contrôler, une chaîne à maillons bloquants (47) montée coulissante le long de ladite colonne et un boîtier de renvoi (49) porté par ladite colonne et comportant un conduit de guidage coudé pour ladite chaîne, présentant une sortie latérale par où ladite chaîne ressort sensiblement horizontalement sous forme de tronçon rigide (55) avec ses maillons mutuellement bloqués, l'extrémité dudit tronçon rigide étant liée audit support de capteurs pour le déplacer en regard d'une surface à contrôler de ladite pièce.

2. Installation selon la revendication 1, **caractérisée en ce que** lesdits capteurs mettent en oeuvre des phénomènes physiques différents.

3. Installation selon la revendication 1 ou 2, **caractérisée en ce que** ledit support est équipé d'un capteur à courants de Foucault (27) et d'au moins un capteur à ultrasons (29a, 29b).

4. Installation selon l'une des revendications précédentes, **caractérisée en ce que** ledit support de capteurs comporte des galets de roulement (32) par lesquels il est en contact avec ladite surface à contrôler pendant ladite scrutation.

5. Installation selon l'une des revendications précédentes, **caractérisée en ce que** ledit support de capteurs est assujetti à se déplacer dans un liquide de couplage (38).

6. Installation selon la revendication 5, **caractérisée en ce que** ledit liquide de couplage est de l'eau.

7. Installation selon l'une des revendications précédentes, **caractérisée** en ce le plateau horizontal (35) est tournant, ladite pièce étant posée de telle sorte que son axe de révolution coïncide avec un axe de rotation dudit plateau.

8. Installation selon la revendication 7 et la revendication 5 ou 6, **caractérisée en ce que** ledit plateau est installé dans une cuve (37) remplie du liquide de couplage précité.

9. Installation selon l'une des revendications précédentes, **caractérisée en ce que** ledit support est rattaché de façon articulée à l'extrémité d'un moyen de déplacement (41) agencé pour le déplacer radialement par rapport à l'axe de rotation dudit plateau.

10. Installation selon l'une des revendications 3 à 9, **caractérisée en ce que** ledit support est équipé de deux capteurs à ultrasons (29a, 29b) disposés de part et d'autre dudit capteur à courants de Foucault (27).

11. Installation selon la revendication 10, **caractérisée en ce que** ledit capteur à courants de Foucault (27) est agencé pour être placé en regard d'une zone élémentaire en cours de contrôle et **en ce que** les deux capteurs à ultrasons (29a, 29b) sont orientés de façon que leurs axes d'action convergent sensiblement vers ladite zone élémentaire.

12. Installation selon la revendication 11, **caractérisée en ce que** lesdits axes sont dans sensiblement le même plan.

13. Installation selon la revendication 12, **caractérisée en ce que** lesdits capteurs à ultrasons sont mis en oeuvre alternativement.

14. Installation selon l'une des revendications 1 à 13, **caractérisée en ce que** ledit boîtier (49) abrite un pignon (61) en prise avec ladite chaîne et entraîné par un moteur électrique commandé (63).

15. Installation selon l'une des revendications 1 à 14, **caractérisée en ce que** ledit boîtier de renvoi (49) est connecté à l'extrémité inférieure de ladite colonne et **en ce que** celle-ci est mobile verticalement pour permettre le positionnement dudit boîtier de renvoi à une hauteur telle que ledit support de capteurs puisse scruter une surface annulaire donnée de ladite pièce.

16. Installation selon l'une des revendications 1 à 15, **caractérisée en ce que** ledit plateau (35) est un plateau rotatif d'axe de rotation vertical.

17. Installation selon l'une des revendications 1 à 16, **caractérisée en ce que** ledit plateau est agencé au fond d'une cuve (37) conformée et dimensionnée pour recevoir ladite pièce et **en ce que** ladite cuve est remplie d'un liquide de couplage (38) nécessaire au bon fonctionnement d'au moins l'un des capteurs précités.

## Patentansprüche

1. Anlage zur zerstörungsfreien Prüfung eines einen Rotor bildenden Teils, das eine Rotationsachse aufweist und koaxiale sowie axial benachbarte ringförmige Hohlräume und einen gemeinsamen Raum (21), der sich zwischen den ringförmigen Hohlräumen (17) axial erstreckt, umfasst, umfassend einen Sensorträger (25), der geeignet ist, sich gegenüber einer zu prüfenden Fläche des Teils zu bewegen, sowie Mittel, um eine Kreisbewegung und eine Radialbewegung des Trägers und/oder des Teils zu kombinieren, und wobei der Träger mit mehreren Sensoren mit unterschiedlichen physikalischen Eigenschaften (27, 29) ausgestattet ist, um spezifische Datengruppen dieser Sensoren aufzunehmen, die jeweils Bereichen der Fläche, welche durch eine einzige Abtastung dieser definiert sind, entsprechen, und
wobei die Anlage **dadurch gekennzeichnet ist, dass** sie eine horizontale Platte (35), auf der das Teil (13) für die Prüfung angeordnet werden kann, eine vertikale Säule (41), die oberhalb der Platte beweglich ist und die dazu eingerichtet ist, in den gemeinsamen Raum des zu prüfenden Teils einzugreifen, eine Kette mit blockierenden Kettengliedern (47), die entlang der Säule verschieblich angebracht ist, sowie ein Umlenkgehäuse (49) aufweist, das von der Säule getragen ist und eine abgewinkelte Führungsleitung für die Kette umfasst, welche einen seitlichen Ausgang aufweist, über den die Kette im Wesentlichen horizontal in Form eines starren Abschnitts (55), dessen Kettenglieder gegenseitig blockiert sind, wieder austritt, wobei das Ende des starren Abschnitts mit dem Sensorträger verbunden ist, um ihn gegenüber einer zu prüfenden Fläche des Teils zu bewegen.

2. Anlage nach Anspruch 1, **dadurch gekennzeichnet, dass** die Sensoren unterschiedliche physikalische Phänomene einsetzen.

3. Anlage nach Anspruch 1 oder 2, **dadurch gekennzeichnet, dass** der Träger mit einem Wirbelstromsensor (27) und mit wenigstens einem Ultraschallsensor (29a, 29b) ausgestattet ist.

4. Anlage nach einem der vorhergehenden Ansprüche, **dadurch gekennzeichnet, dass** der Sensorträger Laufrollen (32) umfasst, über die er mit der zu prüfenden Fläche während der Abtastung in Kontakt ist.

5. Anlage nach einem der vorhergehenden Ansprüche, **dadurch gekennzeichnet, dass** der Sensorträger einer Bewegung in einer Kopplungsflüssigkeit (38) unterworfen wird.

6. Anlage nach Anspruch 5, **dadurch gekennzeichnet, dass** die Kopplungsflüssigkeit Wasser ist.

7. Anlage nach einem der vorhergehenden Ansprüche, **dadurch gekennzeichnet, dass** sich die horizontale Platte (35) dreht, wobei das Teil derart aufgesetzt ist, dass seine Rotationsachse mit einer Rotationsachse der Platte zusammenfällt.

8. Anlage nach Anspruch 7 und Anspruch 5 oder 6, **dadurch gekennzeichnet, dass** die Platte in einer Wanne (37), die mit der vorgenannten Kopplungsflüssigkeit gefüllt ist, angebracht ist.

9. Anlage nach einem der vorhergehenden Ansprüche, **dadurch gekennzeichnet, dass** der Träger an dem Ende eines Bewegungsmittels (41), das dazu eingerichtet ist, ihn gegenüber der Rotationsachse der Platte radial zu bewegen, gelenkig befestigt ist.

10. Anlage nach einem der Ansprüche 3 bis 9, **dadurch gekennzeichnet, dass** der Träger mit zwei Ultraschallsensoren (29a, 29b), welche auf beiden Seiten des Wirbelstromsensors (27) angeordnet sind, ausgestattet ist.

11. Anlage nach Anspruch 10, **dadurch gekennzeichnet, dass** der Wirbelstromsensor (27) dazu eingerichtet ist, gegenüber eines in Prüfung befindlichen Einzelbereiches angeordnet zu werden, und dass die beiden Ultraschallsensoren (29a, 29b) derart ausgerichtet sind, dass ihre Aktionsachsen im Wesentlichen in Richtung des Einzelbereiches zusammenlaufen.

12. Anlage nach Anspruch 11, **dadurch gekennzeichnet, dass** die Achsen im Wesentlichen in der gleichen Ebene liegen.

13. Anlage nach Anspruch 12, **dadurch gekennzeichnet, dass** die Ultraschallsensoren abwechselnd eingesetzt werden.

14. Anlage nach einem der Ansprüche 1 bis 13, **dadurch gekennzeichnet, dass** in dem Gehäuse (49) ein Ritzel (61), welches mit der Kette in Eingriff ist und über einen gesteuerten Elektromotor (63) angetrieben wird, aufgenommen ist.

15. Anlage nach einem der Ansprüche 1 bis 14, **dadurch gekennzeichnet, dass** das Umlenkgehäuse (49) an das untere Ende der Säule angeschlossen ist und dass diese vertikal beweglich ist, um das Positionieren des Umlenkgehäuses in einer solchen Höhe zu ermöglichen, dass der Sensorträger eine gegebene ringförmige Fläche des Teils abtasten kann.

16. Anlage nach einem der Ansprüche 1 bis 15, **dadurch gekennzeichnet, dass** die Platte (35) eine Drehplatte mit vertikaler Rotationsachse ist.

17. Anlage nach einem der Ansprüche 1 bis 16, **dadurch gekennzeichnet, dass** die Platte am Boden einer Wanne (37), welche dazu ausgebildet und dimensioniert ist, das Teil aufzunehmen, eingerichtet ist, und dass die Wanne mit einer Kopplungsflüssigkeit (38), welche für das richtige Funktionieren von wenigstens einem der vorgenannten Sensoren erforderlich ist, gefüllt ist.

## Claims

1. An installation for non-destructive inspection of a part having an axis of revolution and including annular cavities on a common axis and axially adjacent to one another and a common space (21) extending axially between said annular cavities (17), comprising a sensor support (25) suitable for moving over a surface of said part to be inspected, and means for combining circular displacement and radial displacement of said support and/or of said part, and said support being fitted with a plurality of sensors for sensing different physical characteristics (27, 29) in order to pick up data groups specific to said sensors, and corresponding to respective defined zones of said surface, in a single scan thereof, and
the installation being **characterized in that** it includes a horizontal table (35) on which said part (13) can be placed for inspection, a vertical column (41)movable above said table and arranged to engage in said common space of said part for inspection, a chain of locking links (47) mounted to slide along said column, and a deflector (49) carried by said column and comprising an angled guide duct for said chain, presenting a lateral outlet through which the chain leaves substantially horizontally in the form of a rigid segment (55) having its links blocked mutually one against another, the end of said rigid segment being connected to said central support to move it while facing a surface for inspection of said part.

2. An installation according to claim 1, **characterized in that** said sensors make use of different physical phenomena.

3. An installation according to claim 1 or 2, **characterized in that** said support is fitted with an eddy current sensor (27) and with at least one ultrasound sensor (29z, 29b).

4. An installation according to any one of the preceding claims, **characterized in that** said sensor support includes running wheels (32) via which it comes into contact with said surface to be inspected during said scan.

5. An installation according to any one of the preceding claims, **characterized in that** said sensor support is constrained to move in a coupling liquid (38).

6. An installation according to claim 5, **characterized in that** said coupling liquid is water.

7. An installation according to claim 1, **characterized in that** the horizontal table is rotatable, said part being placed so that its axis of revolution coincides with the axis of rotation of said table.

8. An installation according to claim 7 and claim 5 or 6, **characterized in that** said table is installed in a vessel (37) filled with a coupling liquid.

9. An installation according to any one of the preceding claims, **characterized in that** said support is attached in hinged manner to the end of displacement means (41) arranged to move it radially relative to the axis of rotation of said table.

10. An installation according to any one of claims 3 to 9, **characterized in that** said support is fitted with two ultrasound sensors (29a, 29b) disposed on either side of said eddy current sensor (27).

11. An installation according to claim 10, **characterized in that** said eddy current sensor (27) is arranged to be placed facing an individual zone under inspection, and wherein the two ultrasound sensors (29a, 29b) are oriented so that their action axes converge substantially towards said individual zone.

12. An installation according to claim 11, **characterized in that** said axes lie substantially in the same plane.

13. An installation according to claim 12, **characterized in that** said ultrasound sensors are operated in alternation.

14. An installation according to any one of claims 1 to 13, **characterized in that** said deflector (49) houses a sprocket wheel (61) meshing with said chain and driven by a controlled electric motor (63).

15. An installation according to any one of claims 1 to 14, **characterized in that** said deflector (49) is connected to the bottom end of said column, and wherein said column is vertically movable to enable said deflector to be positioned at a height suitable for enabling said sensor support to scan a given annular area of said part.

16. An installation according to any one of claims 1 to 15, **characterized in that** said table (35) has a vertical axis of rotation.

17. An installation according to any one of claims 1 to 16, **characterized in that** said table is located in the bottom of a vessel (37) shaped and dimensioned to receive said part, and wherein said vessel is filled with a coupling liquid (38) necessary for proper operation of at least one of the said sensors.
